# EUROPEAN PATENT APPLICATION

(11) **EP 4 455 769 A1**
(43) Date of publication of application: **30.10.2024**
(21) Application number: 23315123.2
(22) Date of filing: 27.04.2023
(51) Int. Cl.: G02C 7/02, B24B 13/005, B24B 9/14

(54) **METHOD AND DEVICE FOR CENTERING AN OPHTHALMIC LENS**

(71) Applicant: Essilor International, 94220 Charenton-Le-Pont (FR)
(72) Inventor: Ameurlain, Hugues, 92160 ANTONY (FR)
(74) Representative: Jacobacci Coralis Harle

(57) **Abstract**

The invention relates to a method for centering an ophthalmic lens (10) comprising several distinct patterns (12) located around a pattern free area (13), said method being performed by a processing unit and comprising steps of:
- acquiring at least one image of said ophthalmic lens,
- processing said image to detect said patterns,
- deducing therefrom a position of a centering point (AC).

According to the invention, after said step of processing, only a part of said patterns are selected as a function of their positions relative to said pattern free area, and during said step of deducing, the centering point position is deduced from only the selected patterns positions.

## Description

### TECHNICAL FIELD OF THE INVENTION

The present invention generally relates to the field of eyeglasses.

It more particularly relates to a method for centering a particular ophthalmic lens provided that this lens comprises several distinct patterns located around a pattern free area.

It more specifically applies to myopia prevention lenses, the pattern of which are formed by micro-lenses.

### BACKGROUND INFORMATION AND PRIOR ART

The technical part of the work of an optician, which consists in mounting a pair of ophthalmic lenses in a spectacle frame selected by a customer, may be split into four main operations:
- the acquisition of the shapes of the outlines of the rims of the spectacle frame selected by the customer,
- the centering of each ophthalmic lens, which consists in determining the frame of reference of the lens, then in suitably positioning the outline of the rim acquired beforehand in the frame of reference of the lens so that, once edged to this outline then mounted in its spectacle frame, the lens is correctly positioned with respect to the corresponding eye of the customer and fulfils as best as possible the optical function for which it was designed,
- the blocking of each lens, which consists in attaching a blocking accessory to the lens, so that the lens can be easily extracted from the centering station and then be engaged in the edging station without loss of frame of reference, then
- the edging of each lens, which consists in machining this lens to the outline centered beforehand.

Here, the centering operation is more particularly of interest.

This operation is generally carried out by an optician, using a centering apparatus.

When the ophthalmic lens is standard, this operation consists in determining the position of the optical center of the lens. This optical center has indeed to be positioned in front of the customer's pupil.

But when the lens is a myopia prevention one (or more generally, when the lens presents patterns on one of its optical faces, located around an area free of pattern), this operation is quite different.

The recommendation is indeed to mount this kind of lens in order to position the center of the free-pattern area in front of the customer's pupil, even if the optical center is offset from this area center. Indeed, if this were not the case, the patient would naturally move his head or his eyes so that his gaze passes through the area center, and he would maintain this unnatural head position.

To determine the position of this free-pattern area center, it is known from document WO2022189352 to acquire an image of the lens to be centered by means of a camera, and to process this image in order to determine the center of each pattern, to locate the circle passing through these patterns centers and to deduce therefrom the position of the area center (that coincides with the circle center).

The major drawback of this solution is that it works only if the patterns are distributed along a circle (or more generally along one or several predetermined geometrical figures).

But in practice, because this geometrical figure is not known when the centering operation starts, this process is difficult to implement. Moreover, because some lenses have patterns that are randomly distributed on their optical faces, this process cannot be performed on all lenses.

### SUMMARY OF THE INVENTION

In this context, the present invention provides a method that works on all lenses having patterns located around a free-pattern area.

This centering method is performed by a processing unit and comprises steps of:
- acquiring at least one image of said ophthalmic lens,
- processing said image to detect said patterns,
- selecting only a part of said patterns as a function of their positions relative to said pattern free area,
- deducing the position of a centering point (the area center) from only the selected patterns positions.

In other words, it is possible to select some of the patterns, for instance those that are the closest from the pattern free area, and to deduce therefrom the position of the center of this area. Consequently, the lens can be centered relative to this free-pattern area center, so that, once mounted in a spectacle frame and worn by a wearer, the lens has its free-pattern area center located in front of the wearer's pupil.

Thanks to the invention, this method applies to all lenses having patterns located a free-pattern area, whatever their relative positions.

Other preferred features of the invention are the following ones:
- a geometrical center of each selected pattern is located, and the centering point position is deduced from the locations of said pattern geometrical centers.
- a central point of the ophthalmic lens is determined, and the patterns are selected according to their positions relative to said central point.
- said patterns are sorted according to their angular position relative to said central point, each sorted pattern having a previous pattern and a following pattern, each pattern the distance of which to said central point is greater than the distance between the central point and each of the previous and the following patterns being unselected (preferably only if the angle between the line passing through the previous pattern and the current sorted pattern and the line passing through the following pattern and the current sorted pattern is lower than a pre-defined threshold).
- during said step of deducing, a polygon passing through said selected patterns or tangential to said selected patterns is determined, and the centering point position is deduced from the shape of said polygon.
- the centering point is a barycenter of said polygon.
- an axis of the lens is also deduced from the shape of said polygon.
- said patterns are engraved in the ophthalmic lens, preferably to form micro lenses.
- the method comprises steps of:
   ¤ locating an optical center of said ophthalmic lens,
   ¤ acquiring a shape of an outline along which the ophthalmic lens is to be cut, and
   ¤ positioning said outline relative to said centering point.
- the method comprises a step of determining a parameter relative to a prismatic defect due to the position of said optical center relative to said centering point.
- the method comprises a step of determining a parameter relative to a distribution of patterns inside said outline.
- the method comprises a step of determining a parameter relative to a surface inside said outline occupied by patterns.
- said optical center, said outline, said patterns and said centering point are displayed on a screen together with the value of said parameter.
- a human-man interface is used to manually move said centering point while said processing unit updates the position of said outline and the value of said parameter.
- in a variant, the method comprises an automatic step of moving said centering point according to said parameter.

The invention also relates to a centering apparatus including:
- a chassis,
- a part mounted on the chassis, which is suitable for receiving an ophthalmic lens,
- centering means mounted on the chassis, which include an image sensor for acquiring images of ophthalmic lenses when received on said part, and
- a processing unit programmed for performing a method as defined above.

### DETAILED DESCRIPTION OF EXAMPLE(S)

The following description with reference to the accompanying drawings, given by way of non-limiting example makes it clear what the invention consists in and how it can be reduced to practice.

In the accompanying drawings:
- Figure 1 is a schematic perspective view of an embodiment of a centering and blocking apparatus suitable to perform a process according to the invention,
- Figure 2 is a schematic side view of the centering means of the centering and blocking apparatus shown in Figure 1,
- Figure 3 is a front view of a first example of a lens to be centered by means of the centering and blocking apparatus shown in Figure 1,
- Figure 4 is a zoom of a part of the lens of figures 3,
- Figure 5 is a front view of the lens of figure 3, on which a geometrical figure is shown,
- Figure 6 is a front view of a second example of a lens to be centered by means of the centering and blocking apparatus shown in Figure 1, on which another geometrical figure is shown,
- Figure 7 is a front view of the lens of figure 3, on which the contour along which the lens has to be edged is shown.

The invention relates to an ophthalmic lens intended to be mounted in a rim of a spectacle frame, in order to form a pair of eyeglasses.

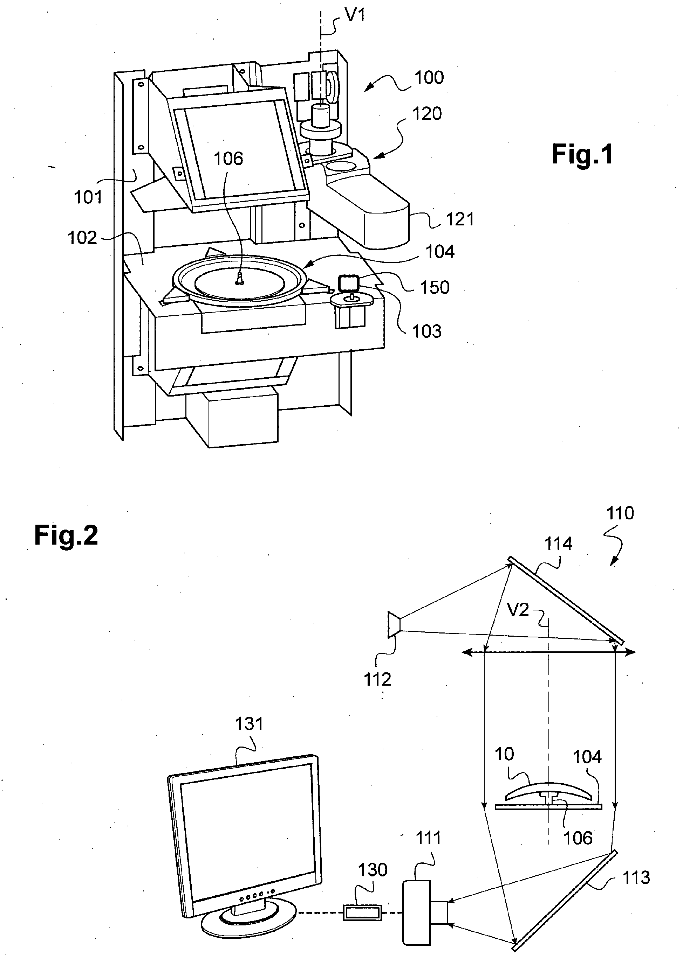

Figure 1 shows an embodiment of an optical machine (hereinafter referred to as "the centering and blocking apparatus 100") for preparing said ophthalmic lens with a view of its edging.

This apparatus is thus used to carry out centering and blocking operations for the ophthalmic lens.

When the shape of the contour along which the lens has to be cut-out is known, the objective of the "centering operation" is to identify the frame of reference of the ophthalmic lens and to determine the position said contour is intended to occupy in this frame of reference. The positioning of said contour is performed in such a manner that the lens, once cut-out along this contour and mounted in the spectacle frame, is located in a suitably centered manner relative to the corresponding eye of the wearer of the pair of eyeglasses.

The objective of the "blocking operation" is to place a blocking accessory 150 on the ophthalmic lens 10, which can, on the one hand, make it easier to take hold of the ophthalmic lens 10 in order to transport it from the centering and blocking apparatus 100 to a cutting-out unit (hereinafter referred to as "edging machine"), and, on the other hand, provide a stable reference mark for indicating the position of the frame of reference of the lens after it has been transported.

The centering-blocking apparatus 100 shown in Figure 1 is automatic in the sense in that the operations of searching the position of the frame of reference of the lens and of positioning the contour inside are performed automatically, without the help of an optician. But in a variant, the used centering-blocking apparatus may be of the manual type.

In the embodiment shown in Figures 1 and 2, the centering and blocking apparatus 100 comprises:
- a chassis 101,
- a workstation 102 that is fixed to the chassis 101 in a horizontal plane and that comprises a holder 103 for holding the blocking accessory 150,
- centering means 110 for centering the lens (see Fig. 2), said means being fixed to the chassis 101 and comprising at least an image sensor 111 for acquiring images of lenses,
- blocking means 120 for placing the blocking accessory 150 on the ophthalmic lens 10, said means being mounted in order to be able to move on the chassis 101, and
- a processing unit 130 (see Fig. 2) to control the centering means and the blocking means.

The workstation 102 comprises a transparent and planar support plate 104 on which is positioned the ophthalmic lens 10. Here this support plate forms a holder for the lens but in a variant shown in the figures, this holder 106 may be a piece distinct from the plate (for instance a rod having a widened head to support the lens).

The blocking means 120 comprise an operating arm 121 that includes a carrier able to take hold of the blocking accessory 150 and to depose it on the front face of the ophthalmic lens 10 placed on the transparent and planar support plate104.

The operating arm 121 is self-driven and has four degrees of freedom. It thus has a mobility in translation along a vertical axis V1 in order to rise or descend in the direction of the planar support plate 104 and a mobility in rotation about this axis V1 in order to move away from or toward the planar support plate 104. Its carrier (non visible) has a mobility in radial translation with respect to this axis V1 and a mobility in rotation about an axis parallel to this axis V1 (to adjust the orientation of the blocking accessory relative to the arm).

The means for centering the ophthalmic lens 10 are, for their part, designed to determine the position of the frame of reference of the ophthalmic lens 10, thanks to a process disclosed hereinafter.

As shown in figure 2, the centering means 110 comprise, on one side of the planar support plate 104, means for illuminating the lens placed onto the planar support plate 104, and, on the other side, image sensor means for acquiring the emitted light.

The illuminating means comprise a light source 112 which emits a light beam and a mirror 114 inclined at 45° which reflects this light beam towards the lens.

The image sensor means comprise an image sensor (here a camera 111) and a mirror 113 inclined at 45° which reflects the light beam towards the camera 111.

The optical axis V2 of the centering means 110 is defined as the axis of the light beam passing through the ophthalmic lens 10.

In a variant, the centering means may comprise a mirror on one side of the lens (downstream the lens - considering the light propagation direction), in which case the illuminating means and the image sensor means would be placed together on the other side of the lens (on the upstream side).

The processing unit 130 is programmed to center and block the ophthalmic lens 10.

To this end, the processing unit 130 comprises a central processing unit (CPU), a memory and input/output components.

Thanks to its memory, the processing unit stores information used in the process described below. It particularly stores a computer application, consisting of computer programs comprising instructions, the execution of which allowing the implementation by the processing unit of the method described below.

This processing unit 130 is connected to the centering means 110 and to the blocking means 120.

It is also connected to a man-machine interface (here a touch screen 131) to allow the optician enter data useful for centering the lens and for controlling this centering operation.

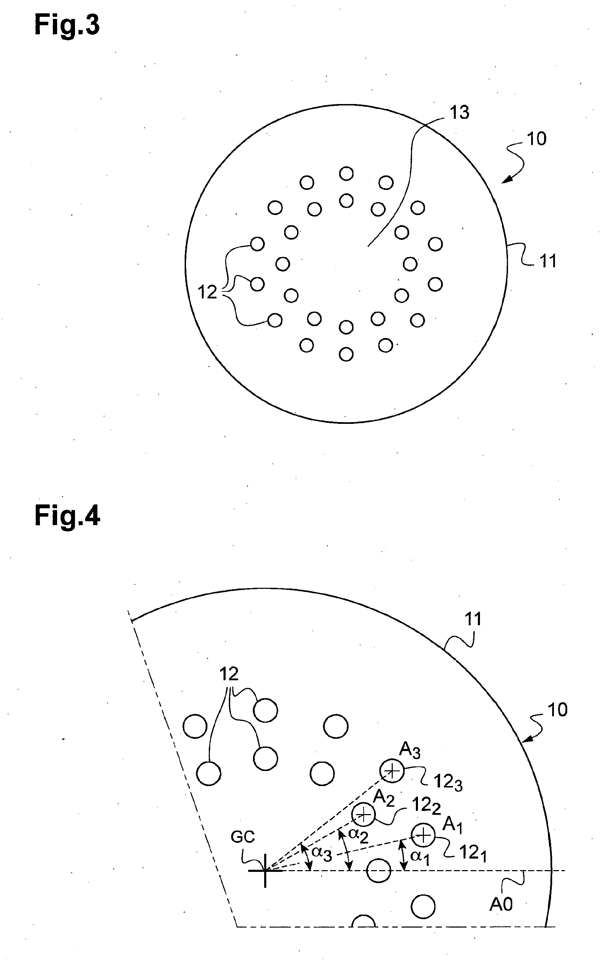

The ophthalmic lens 10 to be edged is shown in Figure 3. This lens has two optical faces (namely a convex front face and a concave back face) and an edge 11, the shape of which is initially circular.

This edge is intended to be machined so that the lens, once edged, presents a shape corresponding to the one of the spectacle frame rim in which it has to be mounted.

The shapes of the front and back faces of this ophthalmic lens 10 are designed such that the lens has optical characteristics allowing defects in the vision of the customer to be corrected.

Here, the ophthalmic lens 10 preferably includes at least a first optical correction for providing correct vision to the wearer at a determined distance.

The first optical correction consists, in our example, in a spherical power for providing correct far vision to the wearer (for looking at objects situated at more than 6 meters). In a variant, this first optical correction could also include a cylindrical and/or a prismatic power.

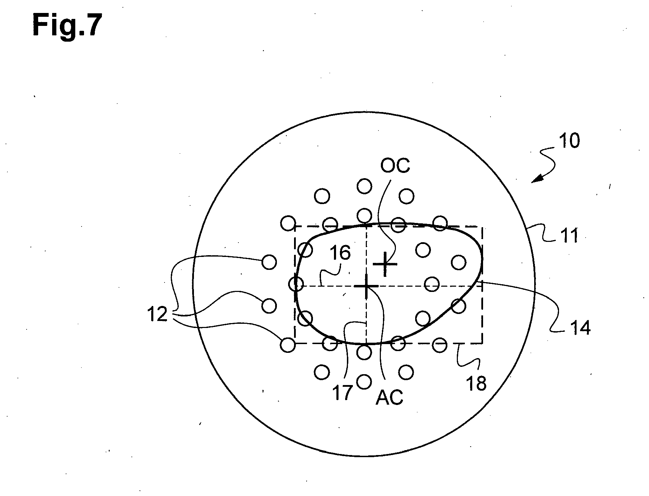

In our example, the optical center OC of the lens is defined as the point of the lens where the light rays are not deviated when they pass through the lens (see Fig.7). This optical center can for instance be determined by using a well-known Hartman device.

The ophthalmic lens 10 also presents, at least on one of its optical faces, several patterns 12. These patterns 12 are designed so that the wearer will not be conscious of their presence. They are located all around a free-pattern area 13 through which the user is intended to look through.

In our example, each pattern 12 is formed by a micro-lens in relief relative to the remainder of the optical face of the lens, that locally modifies the optical power of the lens.

In other words, here, the lens presents a second optical correction for changing the natural evolution of myopia. The patterns 12 are indeed specifically designed to limit or to stop this evolution. An ophthalmic lens having such patterns is described in document WO2019166654.

As shown in Figure 3, these patterns 12 are each round-shaped and they are very numerous. The patterns 12 all have the same shape. Their diameter is here lower than 1 mm.

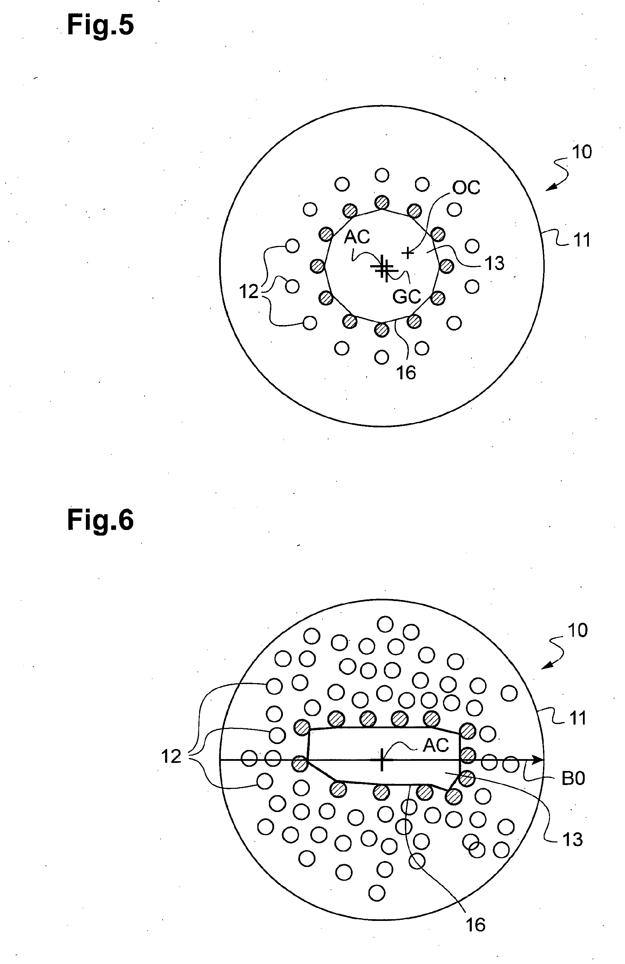

In the shown embodiment, the patterns 12 are distributed along two coaxial circles. But the patterns may be distributed otherwise on the optical face of the lens. For instance, in a variant shown in Figure 6, the patterns 12,are randomly distributed on the surface of the lens, all around the free-pattern area 13.

At this step, we can define the area center AC as the geometrical center of this area 13. As shown in Figure 5, this area center AC can be offset from the geometrical center GC of the lens and/or from the optical center OC of the lens.

To center the lens, the aim is to locate the area center AC in front of the wearer's pupil.

We can here note that, when the area center AC is offset from the optical center OC, this offset can generate prismatic effects. Indeed, in this case, the wearer will look through a zone of the lens where the rays are deviated, that could be uncomfortable for the wearer.

Here, the ophthalmic lens 10 is intended to be automatically centered and blocked.

To this end, during a prior step, the ophthalmic lens 10 is positioned manually or automatically on the transparent plate 104 in such a way that the convex front face is directed away from this plate.

Then, during a first step, the processing unit 130 is programmed to acquire, by means of the camera 111, an image of the lens on the transparent plate. Such an image is shown in Figure 3.

Thanks to the centering means 110 of the apparatus, the edge 11 and the patterns 12 of the ophthalmic lens 10 are visible on this image.

During a second step, this image is processed in order to locate the contour of each pattern 12.

On the basis of these contours, the processing unit 130 determines the position of a characterization point of each pattern.

In a preferred embodiment, this characterization point is the geometrical center of the pattern 12. Because each pattern 12 is circle-shaped, the characterization point is the center of the circle.

During a third step, the processing unit 130 searches for the patterns 12 that are situated next to the free-pattern area 13 and select them.

The selection of these patterns 12 may be performed in various ways.

Here, during a first sub-step, the patterns 12 are ordered as a function of the orientation of their centers around a central point which we know it is (probably) situated in the area 13.

Here, the considered central point is the geometrical center GC of the lens 10. In a variant, it may be another point, for instance the optical center OC of the lens or a barycenter of the patterns centers.

As shown in Figure 4, the orientation of the center of a pattern 12 is here defined by an angle α that is comprised between 0 and 360 degrees, and that is equal to 0 when the pattern center is located on a determined axis A0.

For simplification, FIG. 4 only shows the centers A₁, A₂, As of three patterns 12₁, 12₂, 12s, and their orientations α₁, α₂, α₃.

In the following, with N the number of patterns, we will note Aᵢ the center of any pattern 12ᵢ and αᵢ its orientation (with i lying from 1 to N).

Then, during a second sub-step, the sorted patterns are processed by three. The aim is to determine whether the central pattern is closer to the free-pattern area 13 than the first and third patterns.

In other words, in loop for i going from 1 to N, the three patterns 12ᵢ, 12ᵢ₊₁, 12ᵢ₊₂ are processed to determine if the pattern 12ᵢ₊₁ has to be selected of not. To remove this pattern from the selection, two cumulative conditions have to be fulfilled.

The first one is that the angle between the segment [12ᵢ₊₁12ᵢ] and the segment [12ᵢ₊₁12ᵢ₊₂] is less than 60°.

The second one is that the distance between the geometrical center CG and the pattern 12ᵢ₊₁ is greater than the distance between the geometrical center CG and the pattern 12ᵢ and than the distance between the geometrical center CG and the pattern 12ᵢ₊₂.

If these two conditions are not fulfilled, the pattern 12ᵢ₊₁ is removed from the selection. Else, it is selected.

This process can be implemented in a single loop (with i going from 1 to N) or in successive loops (by repeating said loop at least twice).

Here, as shown in Figures 5 and 6, the only selected patterns are the black ones (in Figure 5, it is those distributed on the circle having the little diameter).

During a fourth step, the processing unit determines the shape of a polygon 16 passing through or next to each of the selected patterns 12.

We may consider the polygon the corners of which are formed by the centers of the selected patterns 12.

But here, as shown in Figures 5 and 6, the considered polygon 16 is the one that is tangential to the patterns 12 and that does not surround these patterns.

In a variant, we may consider a closed curve rather than a polygon, or any - other geometrical figure, provided it passes through or next to each of the selected patterns 12.

During a fifth step, the processing unit determines the geometrical center of this polygon 16 (for instance its center of gravity or more generally it barycenter), that is considered as the area center AC.

As shown in Figure 6, the processing unit 130 can also determine, if any, the orientation of a centering axis B0 that is a longitudinal axis of the free-pattern area 13. To this end, it determines for instance the orientation α of the longest diagonal of the polygon.

The position of the area center AC and the orientation of the centering axis B0 (if any) define the frame of reference of the lens 10.

As shown in Figure 7, the processing unit 130 can therefore position the final outline 14 (along which the lens has to be edged) on the image of the lens 10.

This final outline 14 is defined in its own frame of reference (the frame of reference of the rim). This frame of reference is characterized by a point (the "pupillary point") and, if any, by an inclination of an axis.

To be more precise, we can first define, relative to the final outline 14, a boxing 18 that is a virtual rectangular box circumscribing the final outline 14 and having two horizontal sides (considering the outline of the rim in the worn configuration).

The pupillary point is located relative to this boxing by means of two distances, a height of the pupil relative to the bottom of the boxing 18 and a width equal to half the distance between the pupils of the wearer.

In other words, the pupillary point has a fix position relative to the final outline 14.

Consequently, to center the lens, the processing unit 130 positions the final outline 14 so that its pupillary point coincides with the area center AC (so that once mounted in its eyeglass frame, the lens is well centered regarding the eye of the wearer). If any, this final outline 14 is oriented such that the centering axis A0 fulfills a predetermined requirement (for instance being parallel to the bottom of the boxing 18).

At this step, it could be considered that the lens is well centered and that it is ready to be edged.

But in a preferred embodiment, some checks are done before edging the lens.

To this end, the processing unit 130 first displays on the touchscreen 131 an image of the type shown in Figure 7 (without the boxing 18 and the lines 16, 17).

This image comprises a picture of the lens 10, that is to say a large circle corresponding to the initial contour 11 of the lens (before edging), and little circles corresponding to the contours of the patterns 12.

This image also comprises the optical center OC of the lens, identified by a first cross. It comprises here the area center AC, identified by a second cross.

Finally, this image comprises the final outline 14 of the lens, that is to say the contour along which the lens could be edged.

In a preferred embodiment, other data are also displayed on the touchscreen 131.

Here, all the following data are displayed, but in a variant, only a part of them may be displayed. In another variant, other data may also be displayed.

The first data is the distance between the optical center OC and the area center AC. Indeed, as explained above, this distance generates prismatic power, so that the knowledge of this distance is important for checking that the proposed configuration will not result in too much uncomfortable effects for the wearer.

The second data, that is linked to the first one and to the optical power of the lens, is the prismatic defect that will be felt by the wearer when looking through the area center AC.

A third data is an estimation of the additional power given by the patterns (that form micro-lenses). This estimation can be given by a value (in diopter) or by a color (this color may for instance fill the little circles). According to this value, we can provide the following explanations. The micro-lenses create an image in front of the retina (the wearer is not conscious of this image). Unconsciously, the eye muscles constantly apply a strength on the eye to try to deform it in order that the retina would reach this image. This constant strength over the years will reduce the lengthen of the eye and reduce the increasing of the patent's myopia. In other words, this third data is an indication for the optician, that is linked to the lens and that gives information on its quality.

A fourth data is the percentage of the zone inside the final contour 14 that is covered by patterns 12. Indeed, this value is a relevant criterium to check whether the lens will be able to perform his function of myopia's prevention lens or not.

A fifth data is a balance of patterns between the nasal and the temporal side of the final contour 14.

A sixth data is a balance of patterns between the top and the bottom side of the final contour 14.

These values are also relevant to check whether the lens will be able to perform his function of myopia's prevention lens or not.

To determine these balances, the processing unit 130 can proceed in various ways.

Here, it divides the zone inside the final contour 14 in four parts (see Figure 7), by means of two perpendicular lines 16, 17 that intersect at the area center AC.

In a preferred embodiment, a vertical line 17 and an horizontal line 16 (parallel to the bottom side of the boxing 18) are used. Then, it calculates the percentage of each part of the zone inside final contour 14 that is covered by patterns 12, and it deduces therefore the searched balances, in percentage.

More precisely, the processing unit 130 determines a first balance between the temporal and the nasal areas (on each side of the vertical line 17), and a second balance between the top and the bottom areas (on each side of the horizontal line 16).

At this step, the processing unit 130 is programmed to let the optician the possibility of changing the position of the pupillary point relative to the area center AC, so as to modify the position of the final contour 14 relative to the lens 10.

To this end, he can for instance use arrows that are displayed on the touchscreen 131.

When he moves the pupillary point, the position of the final contour 14 and all the above-mentioned data are recalculated in loop and in real time.

The aim of the optician. is to reach a final configuration that results of a compromise, said compromise being made on the basis of the following observations.

The wearer of a myopia's prevention lens will naturally move his eyes or head so that his gaze exactly passes through the middle of the free-pattern area 13. Considering this natural behavior, the optician tries to keep the pupillary point at its original position (on the area center AC). But a prismatic defect can appear since this area center AC is distinct from the optical center OC. That is why he has to try to find a good compromise between:
- the prismatic defect (that should be as small as possible),
- the distance between the pupillary point and the area center AC (that should be as small as possible),
- the percentage of the optical surface occupied by the patterns 12 (that should be greater than a predetermined threshold),
- a well-balanced distribution of patterns between the top and the bottom sides of the surface, and
- a well-balanced distribution of patterns between the nasal and the temporal sides of the surface.

The best position of the final contour 14 can be manually reached by the optician, by moving this contour by means of the arrows on the touchscreen 131.

But considering all the aspects that have to be taken into account, the processing unit 130 can also be programmed to help the optician to find a good compromise.

For instance, the values that do not match predetermined requirements can be colored in red.

In a variant, the processing unit can propose at least one compromise.

At the end of this process, the pupillary point forms the centering point of the lens 10, that is to say the point of the lens that will be located in front of the wearer's eye pupil.

Finally, the last step consists in blocking the ophthalmic lens 10 by means of the blocking accessory 150.

To this end, the optician loads a blocking accessory 150 on the vertical shaft of the holder 103.

Then, the blocking arm 121 is moved by the processing unit 130 to take hold the blocking accessory 150 and to depose it onto the front face of the lens.

In a preferred embodiment, the blocking accessory 150 is positioned on the pupillary point.

The present invention is in no way limited to the embodiment described and shown.

In particular, this process may apply to standard lenses (having no micro-lenses), if these lenses show patterns such as engraved drawings.

In the above embodiment, the pupillary point is offset from the area center AC after this area center has been located thanks to the polygon 16. But in a variant which is not covered by the present invention, it would be possible to shift the pupillary point in the same way as that described above, after having located the area center AC according to a method different from that described above. Indeed, this area center AC could be located by means of another method such as that described in document EP3943240 or in document WO2022189352.

## Claims

1. Method for centering an ophthalmic lens (10) comprising several distinct patterns (12) located around a pattern free area (13), said method being performed by a processing unit and comprising steps of:
- acquiring at least one image of said ophthalmic lens (10),
- processing said image to detect said patterns (12),
- deducing therefrom a position of a centering point (AC),
**characterized in that**, after said step of processing, only a part of said patterns (12) are selected as a function of their positions relative to said pattern free area (13), and
**in that**, during said step of deducing, the centering point (AC) position is deduced from only the selected patterns (12) positions.

2. Method according to claim 1, wherein a geometrical center (A₁, A₂, A₃) of each selected pattern (12) is located, and the centering point (AC) position is deduced from the locations of said pattern geometrical centers (A₁, A₂, A₃).

3. Method according to claim 1 or 2, wherein a central point (GC) of the ophthalmic lens (10) is determined, and the patterns (12) are selected according to their positions relative to said central point (GC).

4. Method according to claim 3, wherein said patterns (12) are sorted according to their angular position (α₁, α₂, α₃) relative to said central point (GC), each sorted pattern (12) having a previous pattern and a following pattern, each pattern (12) the distance of which to said central point (GC) is greater than the distance between the central point and each of the previous and the following patterns being unselected if the angle between the line passing through the previous pattern and the current sorted pattern and the line passing through the following pattern and the current sorted pattern is lower than a pre-defined threshold.

5. Method according to one of claims 1 to 4, wherein during said step of deducing, a polygon (16) passing through said selected patterns (12) or tangential to said selected patterns (12) is determined, and the centering point (AC) position is deduced from the shape of said polygon (16).

6. Method according to claim 5, wherein the centering point (AC) is a barycenter of said polygon (16).

7. Method according to claim 5 or 6, wherein an axis (B0) of the lens is also deduced from the shape of said polygon (16).

8. Method according to one of claims 1 to 7, wherein said patterns (12) are engraved in the ophthalmic lens, preferably to form micro lenses.

9. Method according to one of claims 1 to 8, comprising steps of:
- locating an optical center (OC) of said ophthalmic lens (10),
- acquiring a shape of an outline (14) along which the ophthalmic lens (10) is to be cut, and
- positioning said outline (14) relative to said centering point (AC).

10. Method according to claim 9, comprising a step of determining a parameter relative to a prismatic defect due to the position of said optical center (OC) relative to said centering point (AC).

11. Method according to claim 9 or 10, comprising a step of determining a parameter relative to a distribution of patterns (12) inside said outline (14).

12. Method according to one of claims 9 to 11, comprising a step of determining a parameter relative to a surface inside said outline (14) occupied by patterns (12).

13. Method according to one of claims 10 to 12, wherein said optical center (OC), said outline (14), said patterns (12) and said centering point (AC) are displayed on a screen (131) together with the value of said parameter, and wherein a human-man interface is used to manually move said centering point (AC) while said processing unit updates the position of said outline and the value of said parameter.

14. Method according to one of claims 10 to 12, comprising an automatic step of moving said centering point (AC) according to said parameter.

15. A centering apparatus (100) including:
- a chassis (101),
- a part (102) mounted on the chassis (101), which is suitable for receiving an ophthalmic lens (10), and
- centering means (110) mounted on the chassis (102), which include an image sensor (111) for acquiring images of ophthalmic lenses (10) when received on said part (102),
**characterized in that** is also comprises a processing unit (130) programmed for performing a method according to any one of claims 1 to 14.
